(19) Europäisches Patentamt / European Patent Office / Office européen des brevets

(11) EP 4 597 671 A1

# (12) EUROPEAN PATENT APPLICATION

published in accordance with Art. 153(4) EPC

(43) Date of publication:
**06.08.2025 Bulletin 2025/32**

(21) Application number: **23871690.6**

(22) Date of filing: **30.08.2023**

(51) International Patent Classification (IPC):
***H01M 10/0565*** *(2010.01)* ***C08L 101/02*** *(2006.01)*
***H01B 1/06*** *(2006.01)* ***H01B 13/00*** *(2006.01)*
***H01M 4/13*** *(2010.01)* ***H01M 4/131*** *(2010.01)*
***H01M 4/133*** *(2010.01)* ***H01M 4/134*** *(2010.01)*
***H01M 4/136*** *(2010.01)* ***H01M 4/38*** *(2006.01)*
***H01M 4/48*** *(2010.01)* ***H01M 4/485*** *(2010.01)*
***H01M 4/525*** *(2010.01)* ***H01M 4/58*** *(2010.01)*
***H01M 4/587*** *(2010.01)* ***H01M 4/62*** *(2006.01)*
***H01M 10/052*** *(2010.01)* ***H01M 50/411*** *(2021.01)*
***H01M 50/449*** *(2021.01)*

(52) Cooperative Patent Classification (CPC):
**C08L 101/02; H01B 1/06; H01B 13/00; H01M 4/13; H01M 4/131; H01M 4/133; H01M 4/134; H01M 4/136; H01M 4/38; H01M 4/48; H01M 4/485; H01M 4/525; H01M 4/58; H01M 4/587; H01M 4/62;**
(Cont.)

(86) International application number:
**PCT/JP2023/031504**

(87) International publication number:
**WO 2024/070450 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 JP 2022154189**

(71) Applicant: **Panasonic Intellectual Property Management Co., Ltd.**
**Kadoma-shi, Osaka 571-0057 (JP)**

(72) Inventor: **HARA Kohei**
**Kadoma-shi, Osaka 571-0057 (JP)**

(74) Representative: **Novagraaf International SA**
**Chemin de l'Echo 3**
**1213 Onex, Geneva (CH)**

## (54) SOLID-ELECTROLYTE MATERIAL, NONAQUEOUS-ELECTROLYTE SECONDARY BATTERY, AND METHOD FOR PRODUCING SOLID-ELECTROLYTE MATERIAL

(57) A solid-electrolyte material of the present disclosure includes a polymer in which an acidic functional group having an alkali metal ion is bonded to a main chain, and the polymer has a crosslinked structure including an electron-donating polar group. A nonaqueous-electrolyte secondary battery of the present disclosure includes a positive electrode containing a positive electrode active material, a negative electrode containing a negative electrode active material, a separator, and a nonaqueous electrolyte, and satisfies at least one selected from the group consisting of (A) to (D):
(A) the nonaqueous-electrolyte secondary battery further includes a membrane containing the solid-electrolyte material of the present disclosure, the membrane disposed on a surface, facing the separator, of at least one selected from the group consisting of the positive electrode and the negative electrode; (B) the nonaqueous-electrolyte secondary battery further includes a membrane containing the solid-electrolyte material of the present disclosure, the membrane disposed on a surface of a particle of at least one selected from the group consisting of the positive electrode active material and the negative electrode active material; (C) the nonaqueous-electrolyte secondary battery further includes a membrane containing the solid-electrolyte material of the present disclosure, the membrane disposed at least at a part of a surface of the separator; and (D) the separator includes the solid-electrolyte material of the present disclosure.

EP 4 597 671 A1

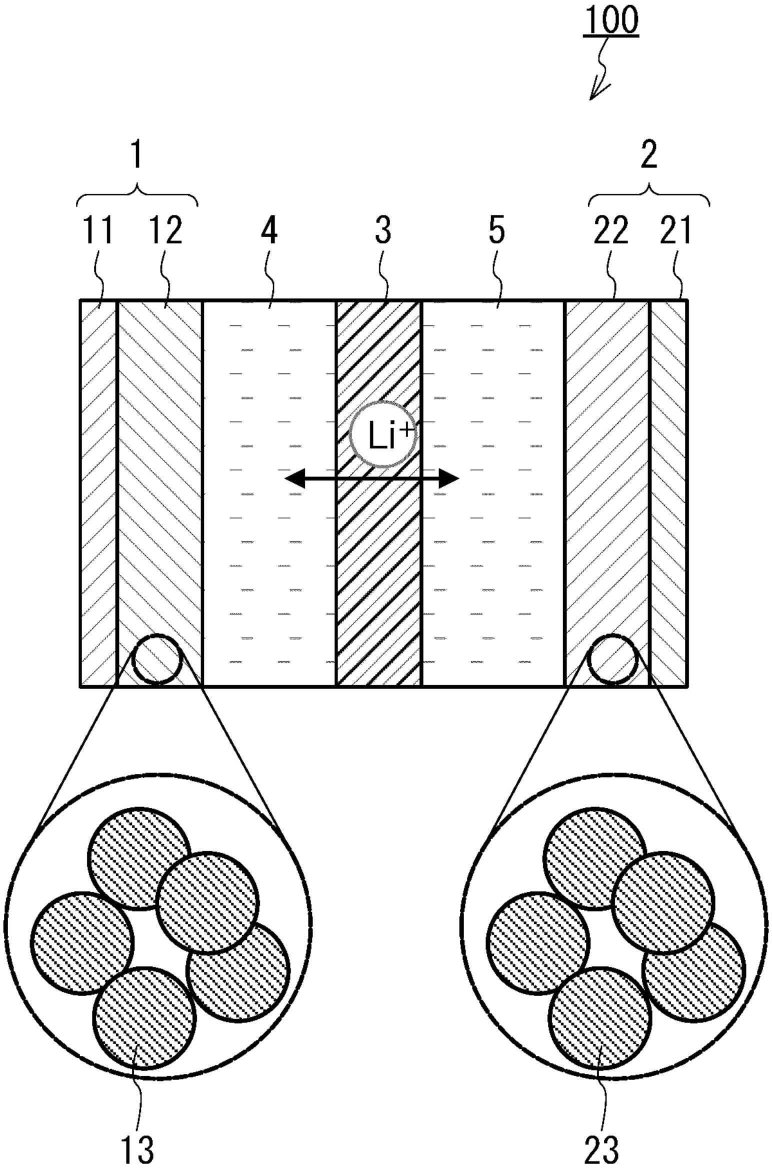


FIG.1

(52) Cooperative Patent Classification (CPC): (Cont.)
**H01M 10/052; H01M 10/0565; H01M 50/411; H01M 50/449;** Y02E 60/10

## Description

TECHNICAL FIELD

The present disclosure relates to a solid-electrolyte material, a nonaqueous-electrolyte secondary battery, and a method for producing the solid-electrolyte material.

BACKGROUND ART

A nonaqueous-electrolyte secondary battery such as a lithium ion secondary battery is widely used for applications requiring high capacity, such as on-vehicle applications, power storage, and the like. A nonaqueous-electrolyte secondary battery typically includes an electrode assembly in which a positive electrode and a negative electrode are stacked or wound via a separator, and a nonaqueous electrolyte.

As one of means for enhancing performance of a battery, for example, improvement of a technique for separating constituents of the battery from each other is considered. In recent years, solid-electrolyte materials used for batteries have been extensively examined. Such a solid-electrolyte material is used instead of an electrolyte solution, and is also used as a material for covering an electrode active material. For example, Patent Literature 1 discloses an all-solid lithium battery that includes a lithium-ion-conductive solid electrolyte formed mainly of sulfide, and an active material having a surface covered with lithium-ion-conductive oxide.

CITATION LIST

Patent Literature

Patent Literature 1: WO2007/004590

SUMMARY OF INVENTION

Technical Problem

A solid-electrolyte material used for separating constituents of a nonaqueous-electrolyte secondary battery from each other is required to exhibit separation performance for separating a nonaqueous solvent used for the battery, and ion conductivity of ions involved in a battery reaction.

The present disclosure provides a solid-electrolyte material, for a nonaqueous-electrolyte secondary battery, which can exhibit both ion conductivity and nonaqueous solvent separation performance.

Solution to Problem

The present disclosure provides a solid-electrolyte material for a nonaqueous-electrolyte secondary battery,

the solid-electrolyte material includes a polymer in which an acidic functional group having an alkali metal ion is bonded to a main chain, and
the polymer has a crosslinked structure including an electron-donating polar group.

Advantageous Effects of Invention

The present disclosure can provide a solid-electrolyte material, for a nonaqueous-electrolyte secondary battery, which can exhibit both ion conductivity and nonaqueous solvent separation performance.

BRIEF DESCRIPTION OF THE DRAWINGS

FIG. 1 is a cross-sectional view schematically showing a part of a configuration of a nonaqueous-electrolyte secondary battery according to a second embodiment.
FIG. 2 is a cross-sectional view of an electrode in the case of the nonaqueous-electrolyte secondary battery shown in FIG. 1 satisfying a configuration (A).
FIG. 3 is a cross-sectional view of an active material in the case of the nonaqueous-electrolyte secondary battery

shown in FIG. 1 satisfying a configuration (B).

FIG. 4 is a cross-sectional view of a separator in the case of the nonaqueous-electrolyte secondary battery shown in FIG. 1 satisfying a configuration (C).

FIG. 5 is a cross-sectional view schematically showing an axial cross-section of a nonaqueous-electrolyte secondary battery having a wound-type electrode assembly, as an example of the nonaqueous-electrolyte secondary battery according to the second embodiment.

DESCRIPTION OF EMBODIMENTS

Embodiments of the present disclosure will be described below with reference to the drawings. The present disclosure is not limited to the following embodiments.

(First embodiment)

A solid-electrolyte material according to a first embodiment of the present disclosure is a solid-electrolyte material used for a nonaqueous-electrolyte secondary battery.

The solid-electrolyte material according to the first embodiment includes a polymer in which an acidic functional group having an alkali metal ion is bonded to a main chain, and the polymer has a crosslinked structure including an electron-donating polar group.

The solid-electrolyte material according to the first embodiment has the above-described configuration and can thus exhibit both ion conductivity (for example, lithium ion conductivity) and separation performance for separating a nonaqueous solvent used for a nonaqueous-electrolyte secondary battery.

In the polymer included in the solid-electrolyte material according to the first embodiment, an acidic functional group having an alkali metal ion is bonded to a main chain. That is, in the polymer included in the solid-electrolyte material according to the first embodiment, an anion serving as a scaffold of an alkali metal ion (for example, lithium ion) is fixed to the main chain. The acidic functional group functions as an anion serving as a scaffold of an alkali metal ion, and captures the alkali metal ion. Furthermore, the polymer included in the solid-electrolyte material according to the first embodiment has a crosslinked structure. The crosslinked structure includes an electron-donating polar group, and can thus serve as a conduction path of the alkali metal ion captured by the acidic functional group to conduct the alkali metal ion. Such a mechanism allows the solid-electrolyte material according to the first embodiment to have ion conductivity. In a case where the polymer included in the solid-electrolyte material according to the first embodiment has the crosslinked structure, the solid-electrolyte material of the first embodiment can inhibit transfer of the nonaqueous solvent. Therefore, the solid-electrolyte material according to the first embodiment can have ion conductivity and can simultaneously exhibit nonaqueous solvent separation performance.

Hereinafter, the polymer included in the solid-electrolyte material according to the first embodiment will be referred to as the polymer according to the first embodiment. In the description herein, unless otherwise specified, the polymer refers to a molecule having a weight-average molecular weight (Mw) of 500 or more.

The main chain of the polymer according to the first embodiment may be a molecular structure that can achieve an electrochemically stable material that can be easily applied to constituents of the battery. Examples of the main chain include polyethylene glycol, polyethylene oxide, polyvinyl alcohol, polysaccharides such as cellulose, and derivatives thereof. For example, the main chain of the polymer according to the first embodiment may include at least one selected from the group consisting of cellulose, a cellulose derivative, polyvinyl alcohol, a polyvinyl alcohol derivative, polyethylene oxide, a polyethylene oxide derivative, polyethylene glycol, and a polyethylene glycol derivative. Among them, the main chain of the polymer according to the first embodiment desirably includes at least one selected from the group consisting of cellulose and a derivative thereof (for example, carboxymethylcellulose (CMC), etc.). At least a part of the main chains of the polymer according to the first embodiment may be formed of cellulose or a derivative thereof, or substantially the entirety of the main chains may be formed of cellulose or a derivative thereof.

In the polymer according to the first embodiment, the acidic functional group is an anionic group that is a counter ion of an alkali metal ion such as $Li^+$, and is bonded to the main chain. That is, the anionic group is fixed to the main chain and does not move, so that alkali metal ions can be conducted at a high transport number. The acidic functional group may be any acidic functional group that can be bonded to the main chain, and can capture an alkali metal ion. Examples of the acidic functional group include a carboxylic acid group, a sulfonic acid group, and a phosphorous acid group. Among them, from the viewpoint of flame retardancy and the like, a phosphorous acid group is desirable.

A preferable example of the polymer according to the first embodiment is a polymer having a structural unit, represented by the following formula (3), in which a phosphorous acid group that captures an alkali metal ion such as $Li^+$ is bonded to the main chain of cellulose.

[Chem. 3]

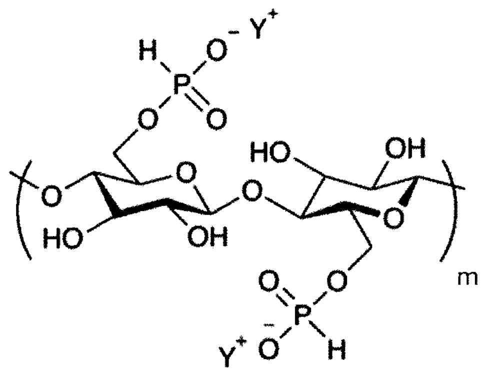

(3)

In formula (3), $Y^+$ represents an alkali metal ion, and m represents a positive integer. The OH group indicated in formula (3) may be replaced with a bonding moiety with a structural unit constituting a structure formed by reaction with a second compound described below as a crosslinking agent, that is, the crosslinked structure.

In the structural unit represented by formula (3), 20% to 80% or 30% to 50% of OH groups of the cellulose are desirably substituted with phosphorous acid groups. In this configuration, ion conductivity of the solid-electrolyte material according to the first embodiment can be enhanced.

The polymer according to the first embodiment may include a structural unit in which a phosphorous acid group having an alkali metal ion is introduced into the main chain of the cellulose, as indicated in formula (3). The polymer according to the first embodiment may be substantially formed of the structural units represented by formula (3) except for the structural units constituting the crosslinked structure. "The polymer according to the first embodiment is substantially formed of the structural units represented by formula (3) except for the structural units constituting the crosslinked structure" means that, in the polymer according to the first embodiment, a content of the structural units represented by formula (3) is 90 mol% or more and desirably 95 mol% or more with respect to the total content of all structural units except for the structural units constituting the crosslinked structure. The polymer according to the first embodiment may be merely formed of the structural units in each of which a phosphorous acid group having an alkali metal ion is introduced into the main chain of cellulose except for the structural units constituting the crosslinked structure.

In the polymer according to the first embodiment, examples of the electron-donating polar group included in the crosslinked structure include an ether group and a nitrile group. That is, the crosslinked structure may include at least one selected from the group consisting of an ether group and a nitrile group, as the above-described polar group. Among them, an ether group is desirable since ion conductivity can be further enhanced. The ether group may be a polyether group. For example, the crosslinked structure in the polymer according to the first embodiment may include an ether group as the polar group. The crosslinked structure in the polymer according to the first embodiment may include a polyether group as the polar group. Such a crosslinked structure can be, for example, formed by using a polyether-based crosslinking agent including a polyether group. The ether group is, for example, a polyethylene oxide group.

The crosslinked structure in the polymer according to the first embodiment may include a structure represented by the following formula (1).

[Chem. 1]

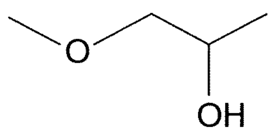

(1)

The structure represented by formula (1) can be formed by reaction between a hydroxy group (OH group) and an epoxy group in a crosslinking reaction.

The crosslinked structure in the polymer according to the first embodiment may include a structure represented by the following formula (2).

[Chem. 2]

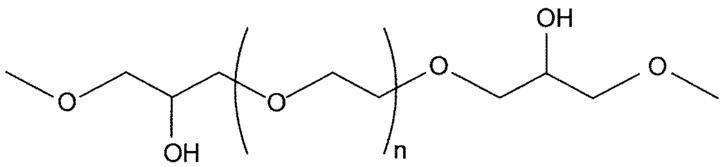

(2)

In formula (2), n represents a positive integer.

The structure represented by formula (2) can be formed by reaction between a hydroxy group (OH group) and, for example, polyethylene glycol diglycidyl ether used as a crosslinking agent in a crosslinking reaction.

The polymer according to the first embodiment may include the structure represented by formula (2) as the crosslinked structure and the structural unit represented by formula (3). In this case, the polymer according to the first embodiment may include a structure represented by the following formula (4).

[Chem. 4]

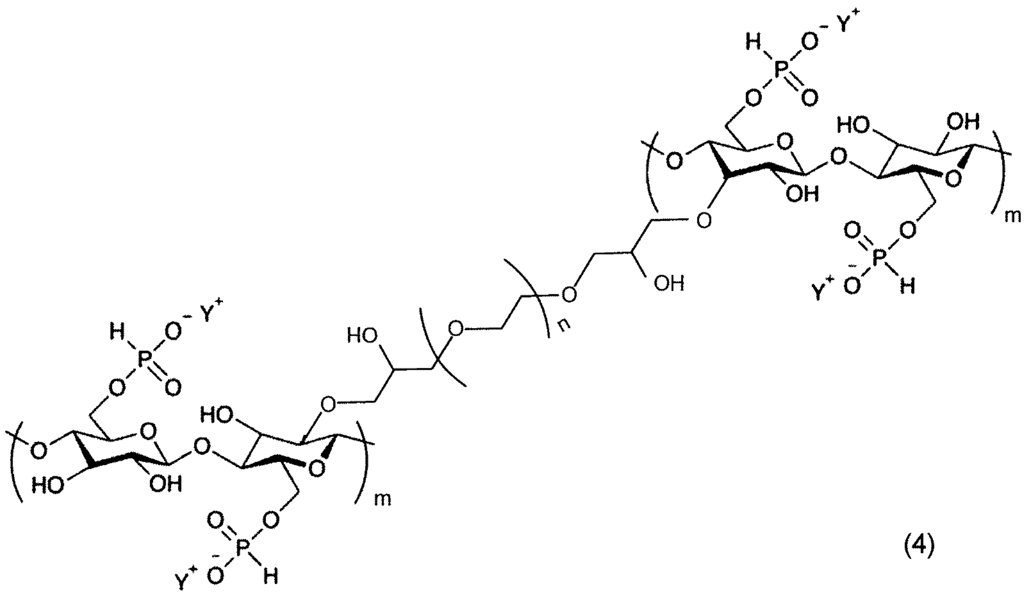

(4)

In formula (4), m and n each represent a positive integer.

In the polymer according to the first embodiment, a ratio (molar ratio) between the structural units constituting the crosslinked structure and the total of other structural units other than the structural units constituting the crosslinked structure can be adjusted as appropriate in consideration of, for example, balance between target ion conductivity and nonaqueous solvent separation performance, a kind of functional group used for the crosslinking reaction, a polar group included in the crosslinked structure, and the like.

The solid-electrolyte material according to the first embodiment may include a component other than the polymer according to the first embodiment. For example, a part of the material used for synthesizing the polymer according to the first embodiment, for example, a crosslinking agent used therefor, or the like may be included.

Next, a method for producing the solid-electrolyte material according to the first embodiment will be described.

The method for producing the solid-electrolyte material according to the first embodiment includes reacting a first compound that is a polymer in which an acidic functional group having an alkali metal ion is bonded to a main chain, with a second compound having an electron-donating polar group, and thus crosslinking the first compound. The first compound includes a first functional group. The second compound includes at least one second functional group having a function of reacting with the first functional group to form a chemical bond, in a molecular structure unit.

The main chain of the first compound may be a molecular structure that can achieve an electrochemically stable material that can be easily applied to constituents of the battery. Examples of the main chain include polyethylene glycol, polyethylene oxide, polyvinyl alcohol, polysaccharides such as cellulose, and derivatives thereof. For example, the main chain of the first compound may include at least one selected from the group consisting of cellulose, a cellulose derivative, polyvinyl alcohol, a polyvinyl alcohol derivative, polyethylene oxide, a polyethylene oxide derivative, polyethylene glycol, and a polyethylene glycol derivative. Among them, the main chain of the first compound desirably includes at least one

selected from the group consisting of cellulose and a derivative thereof (for example, CMC, etc.). At least a part of the main chains of the first compound may be formed of cellulose or a derivative thereof, or substantially the entirety of the main chains may be formed of cellulose or a derivative thereof.

In the first compound, the acidic functional group is an anionic group that is a counter ion of an alkali metal ion such as $Li^+$, and is bonded to the main chain. That is, the anionic group is fixed to the main chain and does not move, so that alkali metal ions can be conducted at a high transport number. The acidic functional group may be any acidic functional group that can be bonded to the main chain, and can capture an alkali metal ion. Examples of the acidic functional group include a carboxylic acid group, a sulfonic acid group, and a phosphorous acid group. Among them, from the viewpoint of flame retardancy and the like, a phosphorous acid group is desirable.

The first compound may be a polymer including an acidic functional group that captures an alkali metal ion, and has a weight-average molecular weight (Mw) of 500 or more. A molecular weight of the first compound is not particularly limited, but, for example, the Mw thereof is 100,000 or more and the Mw thereof may be 300,000 or more. An alkali metal ion captured by the acidic functional group may be, for example, a sodium ion ($Na^+$) or a potassium ion ($K^+$), but the alkali metal ion is desirably a lithium ion ($Li^+$).

The first compound can be, for example, synthesized by introducing an acidic functional group into the main chain, and replacing a counter cation of the acidic functional group with an alkali metal ion. The following formula (5) represents one example of a method for synthesizing the first compound as used when a polymer in which an alkali metal ion ($Y^+$) is a lithium ion ($Li^+$) is produced in the polymer including the structural unit represented by formula (3). As indicated by the following formula (5), imidazolium salt (for example, imidazolium phosphate, etc.) of an acid can be used for introducing an acidic functional group. An ion exchange resin is used to remove imidazolium cations and neutralize an acidic polymer with lithium hydroxide or the like, and thus, a counter cation of the acidic functional group is replaced with a lithium ion.

[Chem. 5]

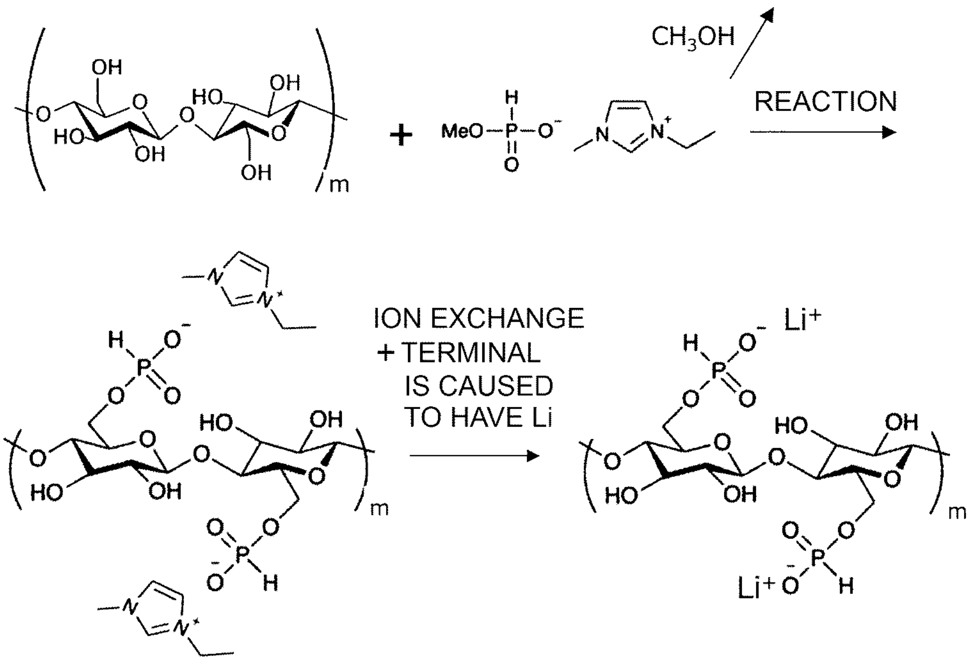


(5)

The first compound used in the method for producing the solid-electrolyte material according to the first embodiment may be formed of one kind of polymer or a plurality of kinds of polymers.

The second compound is used as a crosslinking agent for crosslinking the first compound. The second compound may be a polymer that includes an electron-donating polar group, and includes at least one second functional group having a function of reacting with the first functional group of the first compound to form a chemical bond, in a molecular structure unit. The structural units constituting the crosslinked structure included in the polymer according to the first embodiment are formed by the second compound. That is, the structural unit derived from the second compound serves as a conduction path of an alkali metal ion captured by an acidic functional group to conduct the alkali metal ion. As a result, the solid-electrolyte material of the first embodiment is considered to have high ion conductivity.

In the second compound, the second functional group for a crosslinking reaction with the first compound may include, for example, an epoxy group. Two or more second functional groups may be included in the second compound. In

a case where two or more second functional groups are included in the second compound, the second functional groups may be the same functional group or different functional groups from each other.

Examples of the polar group in the second compound include an ether group and a nitrile group. That is, the second compound may include at least one selected from the group consisting of an ether group and a nitrile group, as the polar group. Among them, an ether group is desirable since ion conductivity can be further enhanced. The ether group may be a polyether group. For example, the second compound may include an ether group or a polyether group as the polar group. The second compound may be a polyether-based crosslinking agent including a polyether group. The ether group is, for example, a polyethylene oxide group.

The second compound may include an ether group as the polar group, and include an epoxy group as the second functional group. The second compound may include, for example, polyethylene glycol diglycidyl ether. The second compound may be substantially formed of polyethylene glycol diglycidyl ether. "The second compound is substantially formed of polyethylene glycol diglycidyl ether" means that a molar ratio (that is, molar fraction) of the total substance amount of polyethylene glycol diglycidyl ether relative to the total of substance amounts of all the polymers constituting the second compound is 90% or more. In an example, the molar ratio may be 95% or more. The second compound may be merely formed of polyethylene glycol diglycidyl ether.

The Mw of the second compound is, but is not particularly limited to, for example, 6000 or less. The Mw of the second compound may be, for example, 100 or more or 150 or more. The second compound may be a polymer.

The second compound used in the method for producing the solid-electrolyte material according to the first embodiment may be formed of one kind of compound or a plurality of kinds of compounds.

In the method for producing the solid-electrolyte material according to the first embodiment, a specific method and procedure for reacting the first compound with the second compound and thus crosslinking the first compound, and conditions such as a temperature condition can be properly selected as appropriate according to the first compound and the second compound to be used. In an example, in a case where the first compound is, for example, a polymer in which a phosphorous acid group for capturing an alkali metal ion is bonded to the main chain of cellulose, and the second compound is polyethylene glycol diglycidyl ether, for example, a crosslinking liquid containing the second compound and a solvent is prepared, the first compound (for example, membrane formed by the first compound) is put in the crosslinking liquid, and the resultant product is maintained for five hours or longer at such a temperature that does not cause dehydration condensation of the first compound to cause a reaction between the first compound and the second compound, and the solid-electrolyte material according to the first embodiment can thus be obtained. The temperature that does not cause dehydration condensation of the first compound is preferably 150°C or lower, and may be, for example, approximately room temperature (25°C).

(Second embodiment)

A second embodiment will be described below. The matters described in the first embodiment will be omitted as appropriate.

A nonaqueous-electrolyte secondary battery according to the second embodiment includes a positive electrode containing a positive electrode active material, a negative electrode containing a negative electrode active material, a separator disposed between the positive electrode and the negative electrode, and a nonaqueous electrolyte. The nonaqueous-electrolyte secondary battery according to the second embodiment satisfies at least one selected from the group consisting of the following (A) to (D).

(A) The nonaqueous-electrolyte secondary battery further includes a membrane that contains the solid-electrolyte material according to the first embodiment and is disposed on the surface, facing the separator, of at least one selected from the group consisting of the positive electrode and the negative electrode. (B) The nonaqueous-electrolyte secondary battery further includes a membrane that contains the solid-electrolyte material according to the first embodiment and is disposed on the surfaces of particles of at least one selected from the group consisting of the positive electrode active material and the negative electrode active material. (C) The nonaqueous-electrolyte secondary battery further includes a membrane that contains the solid-electrolyte material according to the first embodiment and is disposed at least at a part of the surface of the separator. (D) The separator includes the solid-electrolyte material according to the first embodiment.

The nonaqueous-electrolyte secondary battery according to the second embodiment includes the solid-electrolyte material according to the first embodiment so as to satisfy at least one of (A) to (D) described above. As described in the first embodiment, the solid-electrolyte material according to the first embodiment exhibits both ion conductivity and nonaqueous solvent separation performance. Therefore, in a case where the nonaqueous-electrolyte secondary battery according to the second embodiment satisfies the above-described (A) or (B), the nonaqueous-electrolyte secondary battery according to the second embodiment can maintain ion conductivity and simultaneously inhibit various problems such as a side reaction or elution of an active material component into a nonaqueous solvent, which occurs due to the electrode or the electrode active material coming into contact with the nonaqueous solvent.

Furthermore, in a case where the nonaqueous-electrolyte secondary battery according to the second embodiment

satisfies the above-described (C) or (D), the separator of the nonaqueous-electrolyte secondary battery according to the second embodiment can inhibit transfer of the nonaqueous solvent while maintaining ion conductivity. Therefore, a by-product generated by a side reaction on one electrode side or an active material component eluted from the active material on one electrode side, can be inhibited from being transferred to the other electrode side. In a case where the nonaqueous-electrolyte secondary battery according to the second embodiment satisfies the above-described (C) or (D), for example, a nonaqueous solvent which is suitable as a nonaqueous solvent for the positive electrode side (or the negative electrode side) but is not suitable as a nonaqueous solvent for the negative electrode side (or the positive electrode side) can be selectively used for the positive electrode side (or the negative electrode side), and thus, a degree of freedom for design for enhancing performance of the battery becomes high.

FIG. 1 is a cross-sectional view schematically showing a part of a configuration of the nonaqueous-electrolyte secondary battery according to the second embodiment. Here, a lithium ion secondary battery will be described as an example of the nonaqueous-electrolyte secondary battery according to the second embodiment.

A nonaqueous-electrolyte secondary battery 100 shown in FIG. 1 includes a positive electrode 1, a negative electrode 2, a separator 3 disposed between the positive electrode 1 and the negative electrode 2, and a nonaqueous electrolyte. In FIG. 1, reference numeral 4 denotes a nonaqueous electrolyte on the positive electrode side, and reference numeral 5 denotes a nonaqueous electrolyte on the negative electrode side. The positive electrode 1 includes, for example, a positive electrode current collector 11, and a positive electrode active material layer 12 disposed on the positive electrode current collector 11. The positive electrode active material layer 12 includes a positive electrode active material 13. The negative electrode 2 includes, for example, a negative electrode current collector 21, and a negative electrode active material layer 22 disposed on the negative electrode current collector 21. The negative electrode active material layer 22 includes a negative electrode active material 23.

FIG. 2 is a cross-sectional view of the electrode in the case of the nonaqueous-electrolyte secondary battery shown in FIG. 1 satisfying the configuration (A). An example in which the positive electrode 1 satisfies the above-described (A) will be described below. The positive electrode 1 shown FIG. 2 further includes a coating membrane 6 disposed on the surface facing the separator 3. The coating membrane 6 is a membrane including the solid-electrolyte material according to the first embodiment. The coating membrane 6 may be formed of the solid-electrolyte material according to the first embodiment. The coating membrane 6 may be formed at a part of the surface, facing the separator 3, of the positive electrode active material layer 12 or may cover the entirety of the surface facing the separator 3. The coating membrane 6 has, for example, a thickness of 1 nm to 1000 nm and desirably 1 nm to 100 nm. The coating membrane 6 having such a configuration can separate the positive electrode active material layer 12 and the nonaqueous solvent of the nonaqueous electrolyte 4 from each other while maintaining ion conductivity. Therefore, a side reaction between the positive electrode active material 13 and the nonaqueous solvent is inhibited, and furthermore, the active material component is inhibited from being eluted from the positive electrode active material 13 into the nonaqueous solvent. The thickness of the coating membrane 6 is obtained by, for example, forming a cross-section of the positive electrode 1 by a cross section polisher (CP), and observing the cross-section of the positive electrode 1 by a scanning electron microscope (SEM). The coating membrane 6 may be formed on the negative electrode active material layer 22 of the negative electrode 2.

The coating membrane 6 can be formed by, for example, applying a dispersion liquid of the solid-electrolyte material according to the first embodiment onto the positive electrode active material layer 12 and drying the obtained product. The application method is not particularly limited, and a known application method such as die coating and spray coating can be selected as appropriate. In another method, for example, a solution containing the first compound is applied onto the positive electrode active material layer 12, and the resultant product is brought into contact with a solution containing the second compound to cause a crosslinking reaction of the first compound, and the coating membrane 6 can thus be formed. The coating membrane 6 can also be formed by a method in which a thin membrane is formed by using the solid-electrolyte material according to the first embodiment, and the thin membrane is stacked on the surface of the positive electrode active material layer 12 by transfer or the like.

FIG. 3 is a cross-sectional view of the active material in the case of the nonaqueous-electrolyte secondary battery shown in FIG. 1 satisfying the configuration (B). An example in which the positive electrode active material 13 satisfies the above-described (B) will be described below. A coating membrane 7 including the solid-electrolyte material according to the first embodiment is formed on the surfaces of particles of the positive electrode active material 13 shown in FIG. 3. The coating membrane 7 may be formed of the solid-electrolyte material according to the first embodiment. The coating membrane 7 may be formed at a part of the surface of the particle of the positive electrode active material 13 or may cover the entirety of the surface of the particle. The coating membrane 7 is desirably formed so as to have a uniform thickness over the entire region of the surface of the particle. The coating membrane 7 has, for example, a thickness of 1 nm to 1000 nm and desirably 1 nm to 100 nm. In a case where the coating membrane 7 has a thickness within the range, the coating membrane 7 can more effectively separate the active material and the nonaqueous solvent from each other while ensuring smooth transfer of an alkali metal ion such as a lithium ion. Therefore, a side reaction between the positive electrode active material 13 and the nonaqueous solvent is inhibited, and furthermore, the active material component is inhibited from being eluted from the positive electrode active material 13 into the nonaqueous solvent. The thickness of the coating

membrane 7 is obtained by, for example, forming a cross-section of a particle of the positive electrode active material 13 by a CP, and observing the cross-section of the particle by a SEM. The coating membrane 7 may be formed on the surface of a particle of the negative electrode active material 23 of the negative electrode 2.

The coating membrane 7 can be formed on the surface of the particle of the positive electrode active material 13 by, for example, spray-drying a raw material solution in which the particles of the positive electrode active material 13 is dispersed and the solid-electrolyte material according to the first embodiment is dissolved. Examples of a method other than the spray-drying method include a method in which a solution of the solid-electrolyte material is sprayed to the particles of the positive electrode active material 13, and a method in which the particles of the positive electrode active material 13 are immersed in a solution of the solid-electrolyte material.

FIG. 4 is a cross-sectional view of the separator 3 in the case of the nonaqueous-electrolyte secondary battery shown in FIG. 1 satisfying the configuration (C). A separation membrane 8 including the solid-electrolyte material according to the first embodiment is formed at least at a part of the surface of the separator 3 shown in FIG. 4. The separation membrane 8 may be formed on one principal surface among the surfaces of the separator 3 as shown in FIG. 4, or on both principal surfaces among the surfaces of the separator 3. The separation membrane 8 has, for example, a thickness of 1 nm to 1000 nm and desirably 1 nm to 100 nm. The separation membrane 6 having such a configuration inhibits transfer of the nonaqueous solvent while maintaining ion conductivity via the separator 3. That is, transfer between the nonaqueous solvent of the nonaqueous electrolyte 4 on the positive electrode side and the nonaqueous solvent of the nonaqueous electrolyte 5 on the negative electrode side is inhibited, so that a by-product generated by a side reaction on one electrode side or the active material component eluted from the active material on one electrode side can be inhibited from being transferred to the other electrode side. Furthermore, a solvent suitable as a nonaqueous solvent on the positive electrode side and a solvent suitable as a nonaqueous solvent on the negative electrode side can be selected and used on the respective electrode sides. The thickness of the separation membrane 8 is obtained by, for example, forming a cross-section of a stack of the separator 3 and the separation membrane 8 by a CP, and observing the cross-section of the stack by a SEM.

The separation membrane 8 can be formed by, for example, applying a dispersion liquid of the solid-electrolyte material according to the first embodiment onto the surface of the separator 3 and drying the obtained product. The application method is not particularly limited, and a known application method such as die coating and spray coating can be selected as appropriate. In another method, for example, a solution containing the first compound is applied onto the separator 3, and the resultant product is brought into contact with a solution containing the second compound to cause a crosslinking reaction of the first compound, and the separation membrane 8 can thus be formed. Furthermore, the separation membrane 8 can also be formed by a method in which a thin membrane is formed by using the solid-electrolyte material according to the first embodiment, and the thin membrane is stacked on the surface of the separator 3 by transfer or the like.

In a case where the nonaqueous-electrolyte secondary battery 100 satisfies the configuration (D), the separator 3 shown in FIG. 1 includes the solid-electrolyte material according to the first embodiment. The separator 3 may be formed of the solid-electrolyte material according to the first embodiment. In a case where the nonaqueous-electrolyte secondary battery 100 satisfies the configuration (D), the same effect as the effect in the case of the configuration (C) being satisfied can be obtained.

As described above, the positive electrode 1 includes, for example, the positive electrode current collector 11, and the positive electrode active material layer 12 disposed on the positive electrode current collector 11.

As the positive electrode current collector 11, a sheet or a film formed of a metal material stable in a range of potentials of the positive electrode 1, such as aluminum, stainless steel, titanium, and alloys thereof, can be used. Aluminum and an alloy thereof are inexpensive and can be easily formed into a thin film, and are thus suitable as a material of the positive electrode current collector 11. The sheet or the film may be porous or may have no pores. As the sheet or the film, metal foil, metal mesh, or the like is used. A carbon material such as carbon may be applied to the surface of the positive electrode current collector 11 as a conductive auxiliary material.

The positive electrode active material 13 included in the positive electrode active material layer 12 is not particularly limited as long as the material can reversibly occlude and release a lithium ion. As the positive electrode active material 13, for example, a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, etc., can be used. As the positive electrode active material 13, a lithium-containing transition metal oxide is typically used. The lithium-containing transition metal oxide is a composite oxide containing a transition metal element such as Co, Mn, Ni, or Al in addition to Li. Examples of the metal element contained in the lithium-containing transition metal oxide include at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from Co, Mn, Ni, and Al is preferably contained. Examples of the lithium-containing transition metal oxide include lithium cobalt oxide, lithium nickel cobalt aluminum oxide, lithium nickel cobalt manganese oxide, lithium nickel manganese oxide, and lithium iron phosphate. The positive electrode active material 13 includes, for example, at least one selected from the group consisting of lithium cobalt oxide, lithium nickel

cobalt aluminum oxide, lithium nickel cobalt manganese oxide, lithium nickel manganese oxide, and lithium iron phosphate.

The lithium-containing transition metal oxide has, for example, a layered crystal structure. Specific examples thereof include a layered structure belonging to a space group R-3m and a layered structure belonging to a space group C2/m.

The particles of the lithium-containing transition metal oxide may be secondary particles formed by aggregating multiple primary particles. The median diameter (D50) on a volume basis of the particles of the lithium-containing transition metal oxide is, for example, 3 μm to 30 μm and desirably 5 μm to 25 μm. In a case where the lithium-containing transition metal oxide is the secondary particles formed of the primary particles, D50 of the composite oxide means D50 of the secondary particles. D50 represents a particle diameter at which a cumulative frequency indicates 50% counting from the small particle diameter side in a particle size distribution on a volume basis, and is also referred to as median diameter. The particle size distribution of the composite oxide can be measured by using water as a dispersant with use of a laser diffraction type particle size distribution analyzer (for example, MT3000II manufactured by MicrotracBEL Corp.).

The positive electrode active material layer 12 may include other materials such as a conductive additive and a binder. Examples of the conductive additive include carbon black such as acetylene black and ketjen black, and carbon materials such as graphite, carbon nanotubes (CNT), carbon nanofibers, and graphene. Examples of the binder include fluorine-containing resin such as polytetrafluoroethylene (PTFE) and polyvinylidene fluoride (PVdF), polyacrylonitrile (PAN), polyimide, acrylic resin, and polyolefin. Furthermore, the above-described resin, and carboxymethylcellulose (CMC) or a salt thereof, polyethylene oxide (PEO), etc., may be used in combination.

As described above, the negative electrode 2 includes, for example, the negative electrode current collector 21, and the negative electrode active material layer 22 disposed on the negative electrode current collector 21.

As the negative electrode current collector 21, a sheet or a film formed of a metal material stable in a range of potentials of the negative electrode 2, such as stainless steel, nickel, copper, and alloys thereof, can be used. The sheet or the film may be porous or may have no pores. As the sheet or the film, metal foil, metal mesh, or the like is used. A carbon material such as carbon may be applied to the surface of the negative electrode current collector 21 as a conductive auxiliary material.

The negative electrode active material 23 included in the negative electrode active material layer 22 is not particularly limited as long as the material can reversibly occlude and release a lithium ion. Examples of the negative electrode active material 23 include carbon materials, silicon, silicon compounds, tin, tin compounds, lithium titanate, and NiBi alloys. The negative electrode active material 23 includes, for example, at least one selected from the group consisting of a carbon material, silicon, a silicon compound, tin, a tin compound, lithium titanate, and a NiBi alloy. Preferable examples of the carbon material include graphite, and examples of the graphite include natural graphite such as flake graphite, massive graphite, and earthy graphite, and artificial graphite such as massive artificial graphite (MAG) and graphitized mesophase carbon microbeads (MCMB). As the negative electrode active material, graphite and a silicon-containing material such as silicon and a silicon compound may be used in combination.

The negative electrode active material layer 22 may include other materials such as a conductive additive and a binder. As the conductive additive, a material that is the same as a material usable for the positive electrode active material layer 13 can be used for the negative electrode active material layer 22. Similarly to the case for the positive electrode active material layer 13, as the binder, fluorine resin, PAN, polyimide, acrylic resin, polyolefin, etc., can be used, but styrene-butadiene rubber (SBR) is desirably used. The negative electrode active material layer 22 may include CMC or a salt thereof, polyacrylic acid (PAA) or a salt thereof, polyvinyl alcohol (PVA), etc. Among them, SBR, and CMC or a salt thereof and/or PAA or a salt thereof are suitably used in combination.

For the separator 3, a porous sheet having ion permeability and insulating property is used. Specific examples of the porous sheet include microporous thin films, woven fabric, and non-woven fabric. As the material of the separator 3, polyolefin such as polyethylene and polypropylene, cellulose, etc. are suitable. The separator 3 may have a monolayer structure or a multilayer structure. A highly heat-resistant resin layer such as an aramid resin layer may be formed on the surface of the separator 3. A filler layer including an inorganic filler may be formed at an interface between the separator 3 and at least one of the positive electrode 1 and the negative electrode 2. In a case where the nonaqueous-electrolyte secondary battery 100 according to the second embodiment satisfies the above-described (D), the separator 3 includes the solid-electrolyte material according to the first embodiment.

Each of the nonaqueous electrolyte 4 on the positive electrode side and the nonaqueous electrolyte 5 on the negative electrode side includes a nonaqueous solvent and an electrolyte salt dissolved in the nonaqueous solvent, in the nonaqueous electrolyte. As the nonaqueous solvent, for example, esters, ethers, nitriles, amides, a mixed solvent of two or more thereof, etc. are used. The nonaqueous solvent may contain a halogen substituted substance in which at least a part of hydrogen atoms in the solvent is substituted with halogen atoms such as fluorine atoms. Examples of the nonaqueous solvent include ethylene carbonate (EC), ethyl methyl carbonate (EMC), dimethyl carbonate (DMC), diethyl carbonate (DEC), fluoroethylene carbonate (FEC), methyl 3,3,3-trifluoropropionate (FMP), and mixed solvents thereof. As the electrolyte salt, for example, lithium hexafluorophosphate ($LiPF_6$), lithium tetrafluoroborate ($LiBF_4$), lithium perchlorate

($LiClO_4$), lithium bis(fluorosulfonyl)imide (LiFSI), lithium bis(trifluoromethanesulfonyl)imide (LiTFSI), lithium bisperfluoroethylsulfonylimide ($LiN(SO_2C_2F_5)_2$), $LiAsF_6$, $LiCF_3SO_3$, lithium difluoro(oxalato)borate (LiFOB), etc., can be used. One selected from these electrolyte salts may be used, or two or more of them may be used in combination.

Next, as a more specific configuration example of the nonaqueous-electrolyte secondary battery according to the second embodiment, a nonaqueous-electrolyte secondary battery having a configuration in which a wound-type electrode assembly is included will be described. FIG. 5 is a cross-sectional view schematically showing an axial cross-section of a nonaqueous-electrolyte secondary battery 200 having a wound-type electrode assembly, as an example of the nonaqueous-electrolyte secondary battery according to the second embodiment.

As shown in FIG. 5, the nonaqueous-electrolyte secondary battery 200 includes a wound-type electrode assembly 34, a nonaqueous electrolyte, and an exterior can 36 for housing the electrode assembly 34 and the nonaqueous electrolyte. The electrode assembly 34 has a positive electrode 31, a negative electrode 32, and a separator 33. The positive electrode 31 and the negative electrode 32 form a wound structure in which the positive electrode 31 and the negative electrode 32 are spirally wound with the separator 33 disposed therebetween. The exterior can 36 is a bottomed cylindrical metal container which is opened at one end side in the axial direction, and the opening of the exterior can 36 is sealed by a sealing body 37. Hereinafter, for convenience of description, the sealing body 37 side of the battery 200 is defined as upper side, and the bottom side of the exterior can 36 is defined as lower side.

Similarly to the nonaqueous-electrolyte secondary battery 100 described above, the nonaqueous-electrolyte secondary battery 200 includes the solid-electrolyte material according to the first embodiment so as to satisfy at least one of the above-described (A) to (D).

The positive electrode 31, the negative electrode 32, and the separator 33 of the electrode assembly 34 are each a band-shaped long member, and are spirally wound and thus stacked alternately in the radial direction of the electrode assembly 34. The negative electrode 32 is formed so as to have a size that is slightly larger than the size of the positive electrode 31 for preventing deposition of lithium. That is, the negative electrode 32 is formed so as to be longer than the positive electrode 31 in the longitudinal direction and the width direction (that is, transverse direction). The separator 33 is formed so as to have a size that is slightly larger than the size of at least the positive electrode 31, and, for example, the two separators 33 are disposed such that the positive electrode 31 is disposed therebetween. The electrode assembly 34 has a positive electrode lead 40 connected to the positive electrode 31 by welding or like, and a negative electrode lead 41 connected to the negative electrode 32 by welding or the like.

Here, as a more specific configuration example of the nonaqueous-electrolyte secondary battery according to the second embodiment, a cylindrical battery in which the electrode assembly 34 having a wound structure is housed in the bottomed cylindrical exterior can 36 is illustrated. However, the electrode assembly may be a stacked-type electrode assembly in which a plurality of positive electrodes and negative electrodes are alternately stacked one by one via the separator. The type of the nonaqueous-electrolyte secondary battery according to the second embodiment is not limited to the cylindrical type, and the nonaqueous-electrolyte secondary battery may be a prismatic battery, a laminate battery, a coin-shaped battery, or the like.

The positive electrode 31 has a positive electrode current collector 31a, and a positive electrode active material layer 31b formed on the positive electrode current collector 31a. The positive electrode active material layer 31b is preferably formed on each of both surfaces of the positive electrode current collector excluding an exposed portion at which the positive electrode lead 40 is welded. For example, the positive electrode 31 can be produced by applying a positive electrode slurry containing a positive electrode active material, a conductive additive, a binder, and the like onto the positive electrode current collector 31a, drying the coating film, and then compressing the resultant product to form the positive electrode active material layer 31b on each of both surfaces of the positive electrode current collector 31a. Detailed descriptions for the positive electrode current collector 31a and the positive electrode active material layer 31b in the positive electrode 31, and the positive electrode active material, the conductive additive, and the binder included in the positive electrode active material layer 31b are the same as those for the positive electrode current collector 11 and the positive electrode active material layer 12 in the positive electrode 1 of the nonaqueous-electrolyte secondary battery 100, and the positive electrode active material 13, the conductive additive, and the binder included in the positive electrode active material layer 12, respectively.

The negative electrode 32 has a negative electrode current collector 32a, and a negative electrode active material layer 32b formed on the negative electrode current collector 32a. The negative electrode active material layer 32b is preferably formed on each of both surfaces of the negative electrode current collector 32a excluding an exposed portion at which the negative electrode lead 31 is welded. The negative electrode 32 can be produced by applying a negative electrode slurry containing a negative electrode active material, a conductive additive, a binder, and the like onto the surfaces of the negative electrode current collector 32a, drying the coating films, and then compressing the resultant product to form the negative electrode active material layer 32b on each of both surfaces of the negative electrode current collector. Detailed descriptions for the negative electrode current collector 32a and the negative electrode active material layer 32b in the negative electrode 32, and a negative electrode active material, a conductive additive, and a binder included in the negative electrode active material layer 32b are the same as those for the negative electrode current

collector 21 and the negative electrode active material layer 22 in the negative electrode 2 of the nonaqueous-electrolyte secondary battery 100, and the negative electrode active material 23, the conductive additive, and the binder included in the negative electrode active material layer 22, respectively.

Detailed description for the separator 33 is the same as that for the separator 3 in the nonaqueous-electrolyte secondary battery 100.

Insulating plates 38, 39 are disposed above and below the electrode assembly 34, respectively. In the example shown in FIG. 5, the positive electrode lead 40 extends toward the sealing body 37 side through a through hole of the insulating plate 38, and the negative electrode lead 41 extends on the outer side of the insulating plate 39 toward the bottom portion side of the exterior can 36. The positive electrode lead 40 is connected to the lower surface of an internal terminal plate 43 of the sealing body 37 by welding or the like, and a cap 47 that is a top plate of the sealing body 37 connected electrically to the internal terminal plate 43 acts as a positive electrode terminal. The negative electrode lead 41 is connected to an inner surface of a bottom portion of the exterior can 36 by welding or the like, and the exterior can 36 acts as a negative electrode terminal.

A gasket 48 is disposed between the exterior can 36 and the sealing body 37, and air-tightness in the battery is thus ensured. The exterior can 36 has a grooved portion 32 at which a part of a side surface portion protrudes inward and by which the sealing body 37 is supported. The grooved portion 42 is preferably annularly formed along the circumferential direction of the exterior can 36, and supports the sealing body 37 at the upper surface thereof. The sealing body 37 is fixed to the upper portion of the exterior can 36 by the grooved portion 32, and an opening end portion of the exterior can 36 which is caulked to the sealing body 37.

The sealing body 37 has a structure in which the internal terminal plate 43, a lower valve element 44, an insulating member 45, an upper valve element 46, and the cap 47 are stacked in this order from the electrode assembly 34 side. Members of the sealing body 47 are, for example, disk-shaped or ring-shaped, and the members excluding the insulating member 45 are electrically connected to each other. The lower valve element 44 and the upper valve element 46 are connected to each other at the center portions thereof, and the insulating member 45 is disposed between the peripheral portions of the respective valve elements. If the internal pressure of the battery increases due to abnormal heat generation, the lower valve element 44 is deformed so as to press up the upper valve element 46 toward the cap 47 and broken, and thus, a current path between the lower valve element 44 and the upper valve element 46 is interrupted. If the internal pressure is further increased, the upper valve element 46 is broken, and gas is discharged through the opening of the cap 47.

(Other embodiments)

(Additional notes)

The following technology is disclosed by the description of the above embodiments.

(Technology 1)

A solid-electrolyte material for a nonaqueous-electrolyte secondary battery, the solid-electrolyte material including

a polymer in which an acidic functional group having an alkali metal ion is bonded to a main chain, wherein
the polymer has a crosslinked structure including an electron-donating polar group.

In this configuration, the solid-electrolyte material for a nonaqueous-electrolyte secondary battery, which can exhibit both ion conductivity and nonaqueous solvent separation performance (solvent separation performance), can be provided.

(Technology 2)

The solid-electrolyte material according to Technology 1, wherein the acidic functional group is a phosphorous acid group.

In this configuration, ion conductivity of the solid-electrolyte material can be enhanced.

(Technology 3)

The solid-electrolyte material according to Technology 1 or 2, wherein the main chain of the polymer includes at least one selected from the group consisting of cellulose, a cellulose derivative, polyvinyl alcohol, a polyvinyl alcohol

derivative, polyethylene oxide, a polyethylene oxide derivative, polyethylene glycol, and a polyethylene glycol derivative.
In this configuration, ion conductivity and solvent separation performance of the solid-electrolyte material can be enhanced.

(Technology 4)

The solid-electrolyte material according to any one of Technology 1 to Technology 3, wherein the crosslinked structure includes at least one selected from the group consisting of an ether group and a nitrile group, as the polar group.
In this configuration, ion conductivity and solvent separation performance of the solid-electrolyte material can be enhanced.

(Technology 5)

The solid-electrolyte material according to Technology 4, wherein the ether group is a polyethylene oxide group.
In this configuration, ion conductivity and solvent separation performance of the solid-electrolyte material can be enhanced.

(Technology 6)

The solid-electrolyte material according to any one of Technology 1 to Technology 5, wherein the crosslinked structure includes a structure indicated by formula (1) described below.

[Chem. 1]

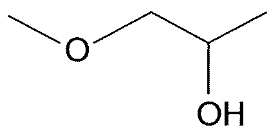

(1)

In this configuration, ion conductivity and solvent separation performance of the solid-electrolyte material can be enhanced.

(Technology 7)

The solid-electrolyte material according to Technology 6, wherein the crosslinked structure includes a structure indicated by formula (2) described below,

[Chem. 2]

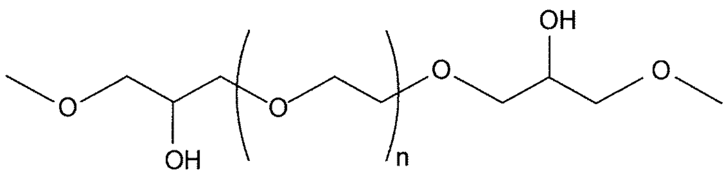

(2)

in the formula (2),
n represents a positive integer.

In this configuration, ion conductivity and solvent separation performance of the solid-electrolyte material can be enhanced.

(Technology 8)

A nonaqueous-electrolyte secondary battery including:

a positive electrode containing a positive electrode active material;
a negative electrode containing a negative electrode active material;

a separator disposed between the positive electrode and the negative electrode; and
a nonaqueous electrolyte, wherein
the nonaqueous-electrolyte secondary battery satisfies at least one selected from the group consisting of (A) to (D) described below,

(A) the nonaqueous-electrolyte secondary battery further includes a membrane containing the solid-electrolyte material according to any one of Technology 1 to Technology 7, the membrane disposed on a surface, facing the separator, of at least one selected from the group consisting of the positive electrode and the negative electrode,
(B) the nonaqueous-electrolyte secondary battery further includes a membrane containing the solid-electrolyte material according to any one of Technology 1 to Technology 7, the membrane disposed on a surface of a particle of at least one selected from the group consisting of the positive electrode active material and the negative electrode active material,
(C) the nonaqueous-electrolyte secondary battery further includes a membrane containing the solid-electrolyte material according to any one of Technology 1 to Technology 7, the membrane disposed at least at a part of a surface of the separator, and
(D) the separator includes the solid-electrolyte material according to any one of Technology 1 to Technology 7.

In this configuration, the solid-electrolyte material that exhibits both ion conductivity and solvent separation performance can be used for separation between constituents of the nonaqueous-electrolyte secondary battery. Therefore, in this configuration, performance and reliability of the nonaqueous-electrolyte secondary battery can be enhanced.

(Technology 9)

The nonaqueous-electrolyte secondary battery according to Technology 8, wherein

the positive electrode active material includes at least one selected from the group consisting of lithium cobalt oxide, lithium nickel cobalt aluminum oxide, lithium nickel cobalt manganese oxide, lithium nickel manganese oxide, and lithium iron phosphate, and
the negative electrode active material includes at least one selected from the group consisting of a carbon material, silicon, a silicon compound, tin, a tin compound, lithium titanate, and a NiBi alloy.

In this configuration, a lithium ion secondary battery exhibiting high performance and high reliability can be obtained.

(Technology 10)

A production method for producing a solid-electrolyte material for a nonaqueous-electrolyte secondary battery, the production method including

reacting a first compound that is a polymer in which an acidic functional group having an alkali metal ion is bonded to a main chain, with a second compound having an electron-donating polar group, to crosslink the first compound, wherein
the first compound includes a first functional group, and
the second compound includes at least one second functional group having a function of reacting with the first functional group to form a chemical bond, in a molecular structure unit.

In this configuration, the solid-electrolyte material for the nonaqueous-electrolyte secondary battery, which can exhibit both ion conductivity and solvent separation performance, can be provided.

(Technology 11)

The production method according to Technology 10, wherein the main chain of the first compound includes at least one selected from the group consisting of cellulose, a cellulose derivative, polyvinyl alcohol, a polyvinyl alcohol derivative, polyethylene oxide, a polyethylene oxide derivative, polyethylene glycol, and a polyethylene glycol derivative.
In this configuration, ion conductivity and solvent separation performance of the solid-electrolyte material can be enhanced.

(Technology 12)

The solid-electrolyte material according to Technology 10 or 11, wherein the second functional group of the second compound includes an epoxy group.

In this configuration, ion conductivity and solvent separation performance of the solid-electrolyte material can be enhanced.

(Technology 13)

The production method according to any one of Technology 10 to Technology 12, wherein the second compound includes at least one selected from the group consisting of an ether group and a nitrile group, as the polar group.

In this configuration, ion conductivity and solvent separation performance of the solid-electrolyte material can be enhanced.

(Technology 14)

The production method according to Technology 13, wherein the ether group is a polyethylene oxide group.

In this configuration, ion conductivity and solvent separation performance of the solid-electrolyte material can be enhanced.

(Technology 15)

The production method according to any one of Technology 10 to Technology 14, wherein the second compound includes polyethylene glycol diglycidyl ether.

In this configuration, ion conductivity and solvent separation performance of the solid-electrolyte material can be enhanced.

Examples

The present disclosure will be further described below by way of examples. However, the present disclosure is not limited to these examples.

<Example 1>

[Synthesis of solid-electrolyte material]

(Synthesis of first compound)

Firstly, the first compound was synthesized. The procedure for synthesizing the first compound was as follows.

(1) 0.5 g of cellulose (Mw: about 300000) was dispersed in 2 mL of dimethyl sulfoxide (DMSO).
(2) 24.5 g of 1-ethyl-3-methylimidazolium methylphosphonate was collected into an eggplant-shaped flask, a stirrer was put into the flask, and heating at 80°C was performed.
(3) The cellulose dispersion liquid obtained in (1) was put into the eggplant-shaped flask, and the content therein was stirred at 80°C, to dissolve the cellulose.
(4) The content therein was heated to 100°C and stirred for 48 hours.
(5) The reaction solution was diluted with water, and was purified with ultrapure water by using a dialysis membrane.
(6) The obtained aqueous solution was mixed with strongly acidic ion exchange resin, and imidazolium cations at the phosphorous acid group terminals were removed.
(7) Lithium hydroxide aqueous solution was put into the aqueous solution having become acidic, and neutralization was performed, and thus, the phosphorous acid group terminal had lithium.
(8) The obtained aqueous solution was concentrated by an evaporator, and the concentrate was put into a flat petri dish made of PFA and naturally dried.
(9) The membrane obtained on the petri dish was vacuum-dried at 100°C, and cellulose having lithium-ion-containing phosphorous acid was obtained.

As described above, the method for synthesizing cellulose having lithium-ion-containing phosphorous acid as the first compound is as indicated by the following formula (5).

[Chem. 5]

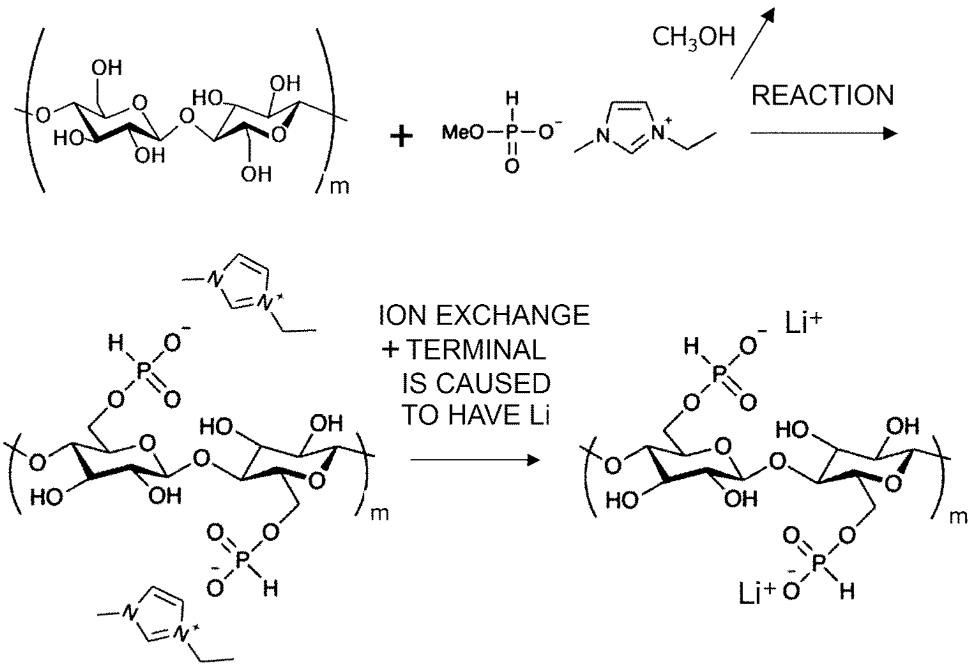


(5)

(Method for crosslinking first compound)

Subsequently, the obtained first compound was caused to react with the second compound as a crosslinking agent, and the first compound was thus crosslinked by using the second compound. The procedure of the crosslinking method was as follows.

(1) 1 mass% aqueous solution of the cellulose having lithium-ion-containing phosphorous acid as obtained by the above-described synthesis method was produced. The aqueous solution of the cellulose having lithium-ion-containing phosphorous acid was cast into a petri dish and dried, to produce a membrane of the cellulose having lithium-ion-containing phosphorous acid.
(2) The obtained membrane of the cellulose having lithium-ion-containing phosphorous acid was put into a crosslinking liquid containing polyethylene glycol diglycidyl ether (polymerization degree n=9) as the second compound, the obtained product was maintained at 60°C for 3 hours, and the membrane of the cellulose having lithium-ion-containing phosphorous acid was caused to react with the polyethylene glycol diglycidyl ether. As the crosslinking liquid, 2-propanol solution containing polyethylene glycol diglycidyl ether at a concentration of 0.5 mol/L and LiOH at a concentration of 0.0017 mol/L was used.
(3) The membrane obtained in (2) was washed with 70 mass% of methanol and dried to obtain a membrane of a solid-electrolyte material having a crosslinked structure.

The membrane of the solid-electrolyte material having the crosslinked structure as obtained in Example 1 had a thickness of 18 μm.

[Evaluation of solvent separation performance]

For the membrane of the solid-electrolyte material having the crosslinked structure as obtained in the above-described method, a test (hereinafter, referred to as solvent separation test) for evaluating solvent separation performance was performed by using an H-shaped cell. A nonaqueous electrolyte (positive electrode solution) for the positive electrode was put into one cell in the H-shaped cell, and a nonaqueous electrolyte (negative electrode solution) for the negative electrode was put into the other cell, and both the cells were separated by the membrane of the solid-electrolyte material having the crosslinked structure in Example 1. The positive electrode solution and the negative electrode solution were as follows.

Positive electrode solution: 0.7 M of $LiPF_6$/FEC+FMP (FEC/FMP=2/8 (volume ratio))

Negative electrode solution: 3 M of LiTFSI+0.1 M of LiFOB/DME

The test cell was maintained at 25°C for 50 hours. Thereafter, a mixed amount of the solvent (DME) of the negative electrode solution in the cell containing the positive electrode solution was quantitatively analyzed by H-NMR. A transfer coefficient of the solvent (DME) toward the positive electrode side was calculated from the mixed amount of the DME, the membrane thickness and area of the membrane of the solid-electrolyte material, and the concentration difference. The results were as indicated below in Table 1. The "concentration difference" refers to concentration difference in initial bulk of a target nonaqueous solvent between the positive electrode solution and the negative electrode solution, and represents a molar concentration of the DME in the negative electrode solution prior to the solvent separation test in Examples. The unit of the transfer coefficient is "mol·cm/(h·cm$^2$·mol/L)", and units in the unit of the transfer coefficient represent the following matters, respectively.

mol: concentration of the DME detected on the positive electrode side
cm: membrane thickness of the membrane of the solid-electrolyte material
h: time of the solvent separation test (50 hours in Examples)
cm$^2$: area of the membrane of the solid-electrolyte material
mol/L: concentration difference (DME concentration in the negative electrode solution prior to the solvent separation test in Examples)

Furthermore, a 10 years-later liquid separation rate was obtained. Specifically, evaluation was performed in the solvent separation test at two different time points, plotting was performed with a square root law (horizontal axis=V(time), vertical axis=liquid separation rate), and a 10-years-later value was extrapolated. The liquid separation rate was a value obtained by subtracting the molar ratio of DME in the positive electrode solution from 100 when FEC+FMP+DME=100 as a molar ratio was satisfied.

[Evaluation of ion conductivity]

Ion conductivity and a $Li^+$ transport number of the solid-electrolyte material of Example 1 were measured by using the membrane of the solid-electrolyte material having the crosslinked structure in Example 1.

A non-blocking electrode in which the membrane of the solid-electrolyte material having the crosslinked structure in Example 1 was disposed between metal lithium electrodes was disposed in a measurement cell, and impedance of the solid-electrolyte material was measured at 60°C by AC impedance measurement.

An actual value of impedance measured at a measurement point at which the absolute value of a phase of complex impedance was smallest in a Nyquist plot obtained by the impedance measurement was regarded as a resistance value of resistance of the membrane of the solid-electrolyte material against ion conductivity. Ion conductivity was calculated by using the resistance value based on the following formula (6).

$$\sigma_{+,-}=(R_{SE}\times S/t)^{-1} \cdots(6)$$

In formula (6), $\sigma_{+,-}$ represents ion conductivity in the AC impedance measurement, S represents an area of the membrane of the solid-electrolyte material, $R_{SE}$ represents a resistance value of the membrane of the solid-electrolyte material in the AC impedance measurement, and t represents a thickness of the membrane of the solid-electrolyte material.

Furthermore, the above-described non-blocking electrode was disposed in the measurement cell, and DC resistance $\sigma_+$ was also measured in the constant voltage measurement.

The $Li^+$ transport number was obtained by calculating a ratio ($\sigma_+/\sigma_{+,-}$) of the DC resistance $\sigma_+$ in the constant voltage measurement relative to the ion conductivity $\sigma_{+,-}$ in the AC impedance measurement.

Table 2 indicates the results of the ion conductivity $\sigma_{+,-}$ in the AC impedance measurement, the ion conductivity $\sigma_+$ in the constant voltage measurement, and the $Li^+$ transport number.

<Example 2>

[Synthesis of solid-electrolyte material]

A solid-electrolyte material was synthesized in the same method as in Example 1 except that the time for the crosslinking reaction was changed from 3 hours to 20 hours in the method for crosslinking the first compound. The

membrane of the solid-electrolyte material having the crosslinked structure as obtained in Example 2 had a thickness of 11 μm.

[Evaluation of solvent separation performance]

The solvent separation performance of the membrane of the solid-electrolyte material in Example 2 was evaluated in the same method as in Example 1. Table 1 indicates the result.

[Evaluation of ion conductivity]

Ion conductivity of the membrane of the solid-electrolyte material in Example 2 was evaluated in the same method as in Example 1. Table 2 indicates the result.

<Reference example 1>

By using the membrane of the first compound produced in Example 1, solvent separation performance and ion conductivity were evaluated in the same method as in Example 1. The membrane of the first compound obtained in Reference example 1 had a thickness of 35 μm. Table 1 indicates the result of solvent separation performance. As the ion conductivity, an arc was not confirmed in the Nyquist plot obtained by the AC impedance measurement, and ion conductivity was not confirmed.

[Table 1]

| | Membrane thickness [μm] | Area [$cm^2$] | Concentration difference mol/L | DME transfer coefficient [$mol\cdot cm/(h\cdot cm^2\cdot mol/L)$] | 10-years-later liquid separation rate [mol%] |
|---|---|---|---|---|---|
| Example 1 | 18 | 0.5 | 2.4 | $<8.9\times10^{-11}$ | 99.7 |
| Example 2 | 11 | 0.5 | 2.4 | $<5.4\times10^{-11}$ | 99.7 |
| Reference example 1 | 35 | 0.5 | 2.4 | $9.0\times10^{-11}$ to $1.3\times10^{-10}$ | 99.6 |

[Table 2]

| | Ion conductivity $\sigma_{+,-}$ in AC impedance measurement | Ion conductivity $\sigma_+$ in constant voltage measurement | $Li^+$ transport number ($\sigma_+/\sigma_{+,-}$) |
|---|---|---|---|
| Example 1 | $4.92\times10^{-11}$ S/cm | $4.27\times10^{-11}$ S/cm | 0.87 |
| Example 2 | $1.64\times10^{-10}$ S/cm | $1.40\times10^{-10}$ S/cm | 0.85 |

Table 1 and Table 2 indicate that the membrane of the solid-electrolyte material in each of Examples 1 and 2, which was formed of polymer having the crosslinked structure, had ion conductivity and exhibited high solvent separation performance. Meanwhile, the membrane formed of polymer having no crosslinked structure in Reference example 1 exhibited lower solvent separation performance as compared with the membranes of Examples 1 and 2, and ion conductivity was not confirmed. According to these results, the solid-electrolyte material of the present disclosure was confirmed to exhibit both ion conductivity and nonaqueous solvent separation performance.

INDUSTRIAL APPLICABILITY

The technology of the present disclosure is useful for lithium secondary batteries.

## Claims

1. A solid-electrolyte material for a nonaqueous-electrolyte secondary battery, the solid-electrolyte material comprising

   a polymer in which an acidic functional group having an alkali metal ion is bonded to a main chain, wherein the polymer has a crosslinked structure including an electron-donating polar group.

2. The solid-electrolyte material according to claim 1, wherein the acidic functional group is a phosphorous acid group.

3. The solid-electrolyte material according to claim 1, wherein the main chain of the polymer includes at least one selected from the group consisting of cellulose, a cellulose derivative, polyvinyl alcohol, a polyvinyl alcohol derivative, polyethylene oxide, a polyethylene oxide derivative, polyethylene glycol, and a polyethylene glycol derivative.

4. The solid-electrolyte material according to claim 1, wherein the crosslinked structure includes at least one selected from the group consisting of an ether group and a nitrile group, as the polar group.

5. The solid-electrolyte material according to claim 4, wherein the ether group is a polyethylene oxide group.

6. The solid-electrolyte material according to claim 1, wherein the crosslinked structure includes a structure indicated by formula (1) described below.

[Chem. 1]

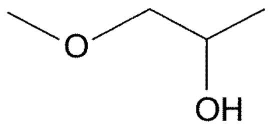

(1)

7. The solid-electrolyte material according to claim 6, wherein the crosslinked structure includes a structure indicated by formula (2) described below,

[Chem. 2]

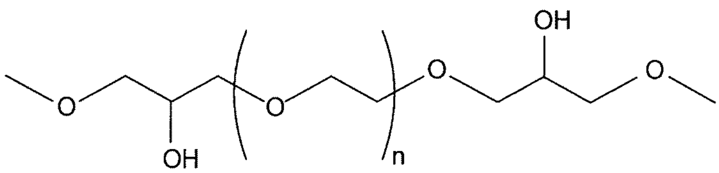

(2)

in the formula (2),
n represents a positive integer.

8. A nonaqueous-electrolyte secondary battery comprising:

a positive electrode containing a positive electrode active material;
a negative electrode containing a negative electrode active material;
a separator disposed between the positive electrode and the negative electrode; and
a nonaqueous electrolyte, wherein
the nonaqueous-electrolyte secondary battery satisfies at least one selected from the group consisting of (A) to (D) described below,
(A) the nonaqueous-electrolyte secondary battery further includes a membrane containing the solid-electrolyte material according to claim 1, the membrane disposed on a surface, facing the separator, of at least one selected from the group consisting of the positive electrode and the negative electrode,
(B) the nonaqueous-electrolyte secondary battery further includes a membrane containing the solid-electrolyte material according to claim 1, the membrane disposed on a surface of a particle of at least one selected from the group consisting of the positive electrode active material and the negative electrode active material,
(C) the nonaqueous-electrolyte secondary battery further includes a membrane containing the solid-electrolyte material according to claim 1, the membrane disposed at least at a part of a surface of the separator, and
(D) the separator includes the solid-electrolyte material according to claim 1.

9. The nonaqueous-electrolyte secondary battery according to claim 8, wherein

the positive electrode active material includes at least one selected from the group consisting of lithium cobalt oxide, lithium nickel cobalt aluminum oxide, lithium nickel cobalt manganese oxide, lithium nickel manganese

oxide, and lithium iron phosphate, and
the negative electrode active material includes at least one selected from the group consisting of a carbon material, silicon, a silicon compound, tin, a tin compound, lithium titanate, and a NiBi alloy.

**10.** A production method for producing a solid-electrolyte material for a nonaqueous-electrolyte secondary battery, the production method comprising

reacting a first compound that is a polymer in which an acidic functional group having an alkali metal ion is bonded to a main chain, with a second compound having an electron-donating polar group, to crosslink the first compound, wherein
the first compound includes a first functional group, and
the second compound includes at least one second functional group having a function of reacting with the first functional group to form a chemical bond, in a molecular structure unit.

**11.** The production method according to claim 10, wherein the main chain of the first compound includes at least one selected from the group consisting of cellulose, a cellulose derivative, polyvinyl alcohol, a polyvinyl alcohol derivative, polyethylene oxide, a polyethylene oxide derivative, polyethylene glycol, and a polyethylene glycol derivative.

**12.** The production method according to claim 10, wherein the second functional group of the second compound includes an epoxy group.

**13.** The production method according to claim 10, wherein the second compound includes at least one selected from the group consisting of an ether group and a nitrile group, as the polar group.

**14.** The production method according to claim 13, wherein the ether group is a polyethylene oxide group.

**15.** The production method according to claim 10, wherein the second compound includes polyethylene glycol diglycidyl ether.

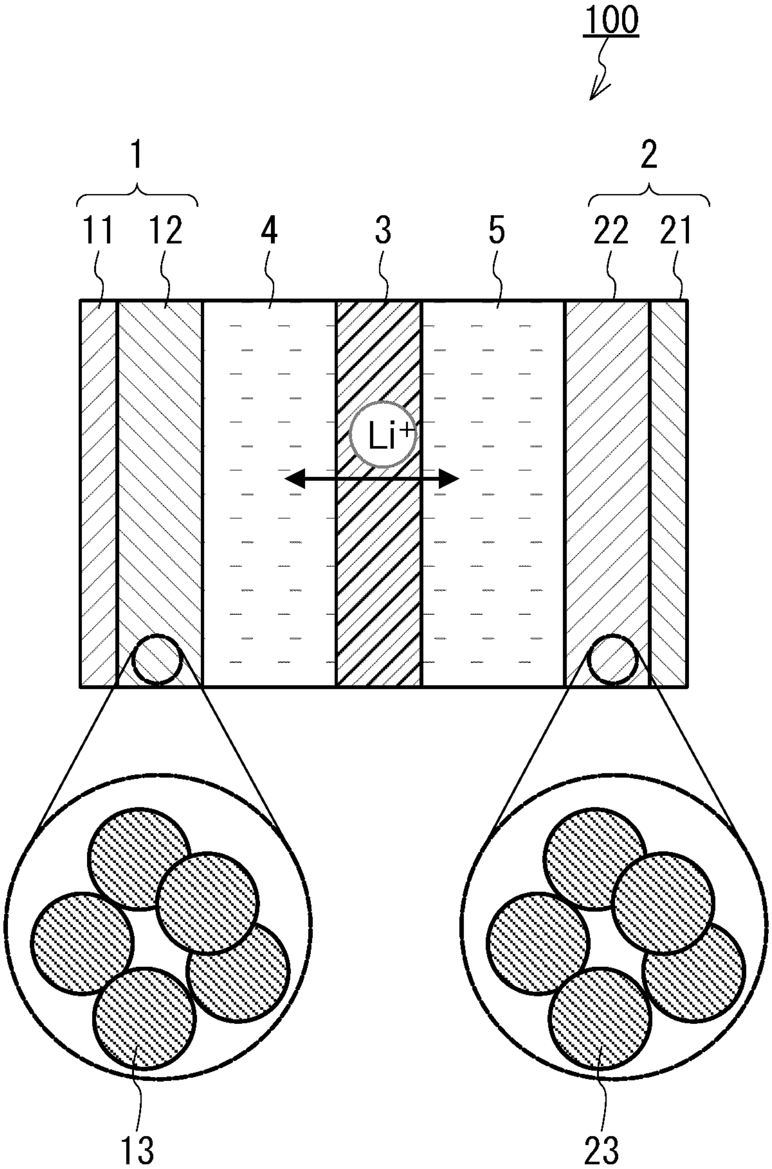


FIG.1

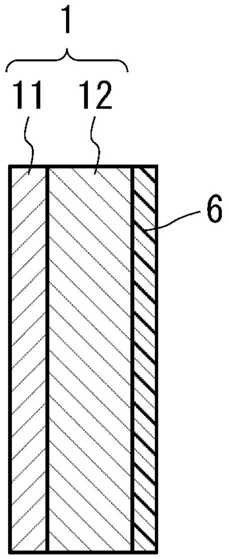


FIG.2

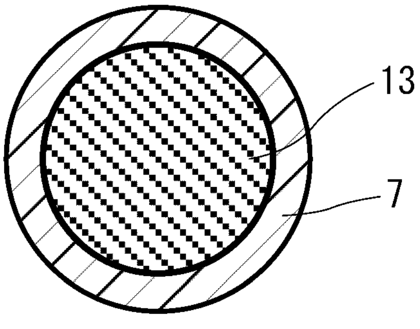


FIG.3

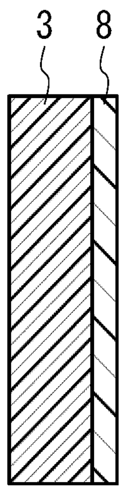


FIG.4

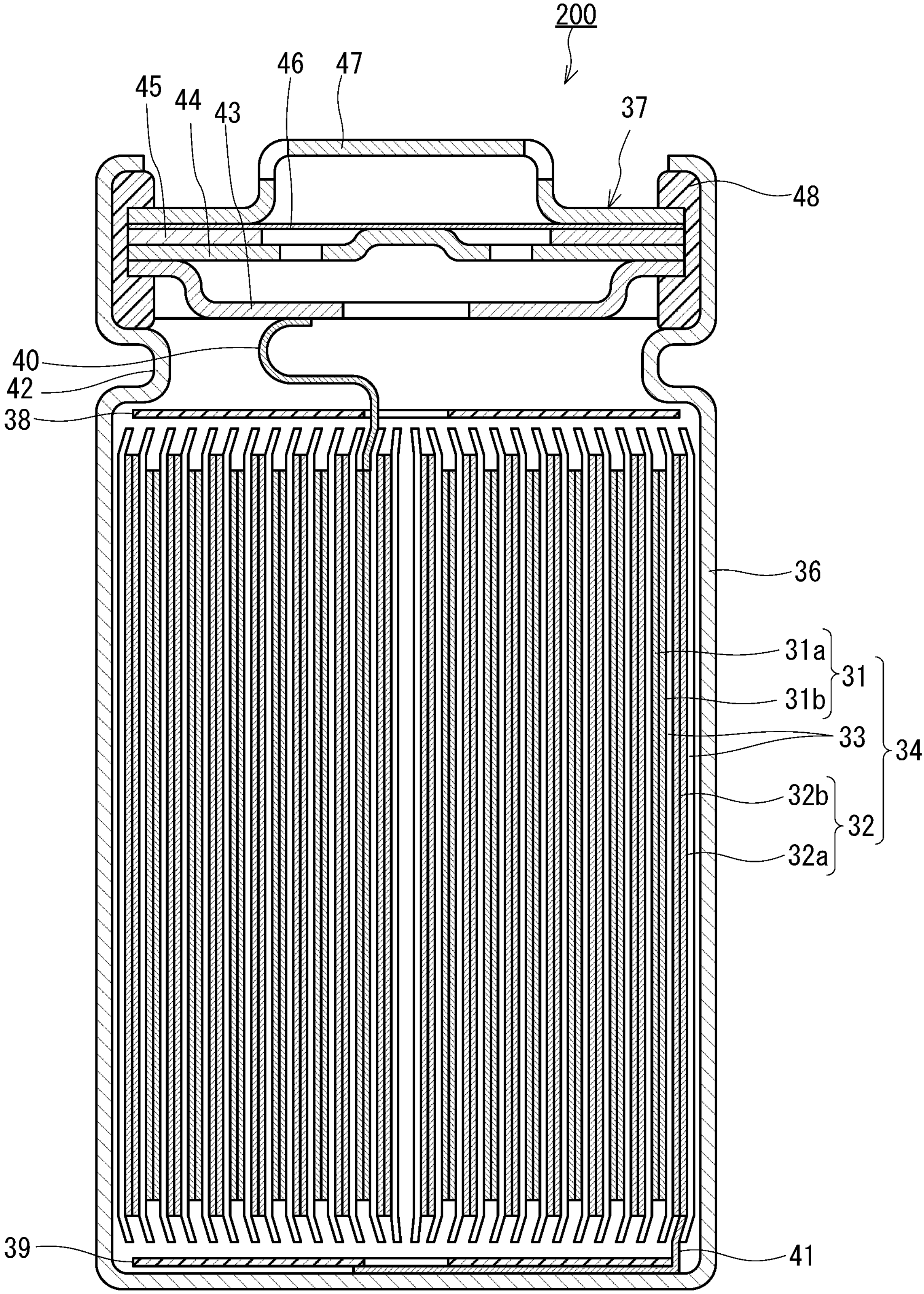


FIG.5

**INTERNATIONAL SEARCH REPORT**

International application No.
**PCT/JP2023/031504**

**A. CLASSIFICATION OF SUBJECT MATTER**

***H01M 10/0565***(2010.01)i; ***C08L 101/02***(2006.01)i; ***H01B 1/06***(2006.01)i; ***H01B 13/00***(2006.01)i; ***H01M 4/13***(2010.01)i; ***H01M 4/131***(2010.01)i; ***H01M 4/133***(2010.01)i; ***H01M 4/134***(2010.01)i; ***H01M 4/136***(2010.01)i; ***H01M 4/38***(2006.01)i; ***H01M 4/48***(2010.01)i; ***H01M 4/485***(2010.01)i; ***H01M 4/525***(2010.01)i; ***H01M 4/58***(2010.01)i; ***H01M 4/587***(2010.01)i; ***H01M 4/62***(2006.01)i; ***H01M 10/052***(2010.01)i; ***H01M 50/411***(2021.01)i; ***H01M 50/449***(2021.01)i

FI: H01M10/0565; C08L101/02; H01B1/06 A; H01B13/00 Z; H01M4/13; H01M4/131; H01M4/133; H01M4/134; H01M4/136; H01M4/38 Z; H01M4/48; H01M4/485; H01M4/525; H01M4/58; H01M4/587; H01M4/62 Z; H01M10/052; H01M50/411; H01M50/449

According to International Patent Classification (IPC) or to both national classification and IPC

**B. FIELDS SEARCHED**

Minimum documentation searched (classification system followed by classification symbols)

H01M10/0565; C08L101/02; H01B1/06; H01B13/00; H01M4/13; H01M4/131; H01M4/133; H01M4/134; H01M4/136; H01M4/38; H01M4/48; H01M4/485; H01M4/525; H01M4/58; H01M4/587; H01M4/62; H01M10/052; H01M50/411; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2021-508159 A (LG CHEMICAL LTD) 25 February 2021 (2021-02-25) paragraphs [0021], [0041], [0052], [0056], [0067]-[0068], [0140] | 1, 3-5, 8-9 |
| Y | | 8-9 |
| X | MARZANTOWICZ, Michal et al. From polymer to polyelectrolyte: Studies of star-branched poly(ethylene oxide) with lithium functional groups. Electrochimica Acta. 01 January 2014, vol. 115, pp. 612-620, DOI: 10.1016/j.electacta.2013.09.167, Available online 19 October 2013 abstract, sections1., 2.1.2-5, 3.2, fig. (2) | 1, 3-5 |
| Y | | 8-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 November 2023** | **21 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/031504**

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 108341933 A (DO-FLUORIDE CHEMICALS CO., LTD.) 31 July 2018 (2018-07-31) paragraphs [0008]-[0020], [0066]-[0071] | 1, 3-5<br>8-9 |
| A | WO 2016/063975 A1 (YOKOHAMA RUBBER CO LTD) 28 April 2016 (2016-04-28) | 1-15 |
| P, A | WO 2023/090362 A1 (UNIV TOHOKU) 25 May 2023 (2023-05-25) | 1-15 |

Form PCT/ISA/210 (second sheet) (January 2015)

**INTERNATIONAL SEARCH REPORT**
**Information on patent family members**

International application No.
**PCT/JP2023/031504**

| Patent document cited in search report | Publication date (day/month/year) | Patent family member(s) | Publication date (day/month/year) |
| --- | --- | --- | --- |
| JP 2021-508159 A | 25 February 2021 | US 2021/0091410 A1<br>paragraphs [0037]-[0040], [0059], [0070], [0087]-[0088], [0157]<br>WO 2020/022777 A1<br>EP 3709425 A1<br>KR 10-2020-0011633 A<br>CN 111819725 A | |
| CN 108341933 A | 31 July 2018 | (Family: none) | |
| WO 2016/063975 A1 | 28 April 2016 | US 2017/0240656 A1<br>DE 112015004815 T5<br>CN 106795233 A | |
| WO 2023/090362 A1 | 25 May 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007004590 A